# EUROPEAN PATENT SPECIFICATION

(11) **EP 4 393 799 B1**
(45) Date of publication and mention of the grant of the patent: **11.06.2025**
(21) Application number: 23212960.1
(22) Date of filing: 29.11.2023
(51) Int. Cl.: B62J 9/12

(54) **STRADDLED VEHICLE**
GRÄTSCHSITZFAHRZEUG
VÉHICULE À SELLE

(30) Priority: 27.12.2022 JP 2022210597
(43) Date of publication of application: 03.07.2024
(73) Proprietor: Yamaha Hatsudoki Kabushiki Kaisha, Iwata-shi, Shizuoka 438-8501 (JP)
(72) Inventor: WAKIMOTO, Yojiro, Iwata-shi, 4388501 (JP); SHINOHARA, Shoya, Iwata-shi, 4388501 (JP)
(74) Representative: Studio Torta S.p.A.

(56) References cited:
- EP-A2- 3 222 506
- US-A1- 2010 077 807
- US-B2- 10 946 918
- US-B2- 8 960 753

## Description

### Technical field

The present invention relates to a straddled vehicle.

### Prior art

There has been conventionally known a type of straddled vehicle including a storage box installed inside a tank shroud (see Japan Laid-open Patent Application Publication No. 2015-83395). An operating member is disposed on the external surface of the tank shroud so as to cause a lid portion of the storage box to perform an opening action.

The document US 8,960,753 B2 shows another known type of straddle vehicle according to the preamble of claim 1. This document shows a storage box with an operating member between the storage box and the steering device of the vehicle.

In the conventional straddled vehicle, the operating member is disposed in adjacent to the lid portion on the external surface of the tank shroud. Because of this, it is required to reliably produce a region for disposing the operating member on the external surface of the tank shroud; consequently, enlargement of a space for installing the storage box is concerned.

### Description of the invention

It is an object of the present invention to provide a straddled vehicle, whereby it is possible to efficiently dispose a storage box inside a side cover, and simultaneously, to inhibit degradation in accessibility to the storage box from an operating member for causing a lid portion of the storage box to perform an opening action.

A straddled vehicle according to an aspect of the present invention includes a head pipe, a steering device, a side cover, a storage box, and an operating member. The steering device is turnably supported by the head pipe. The side cover is disposed lateral to the steering device and on one side of the head pipe in a vehicle width direction. The storage box is disposed inside the side cover. The storage box includes a storage portion, including an opening for putting-in and taking-out of an item, and a lid portion configured to open and close the storage portion. The operating member serves as a member for causing the lid portion to perform an opening action. The operating member is disposed apart from the side cover on the one side of the head pipe in the vehicle width direction and on an inner side of the storage box in the vehicle width direction.

In the straddled vehicle according to the present invention, the operating member is remote from the side cover on the inner side of the storage box in the vehicle width direction. In other words, the operating member is disposed near to the storage box; simultaneously, a region for disposing the operating member can be omitted on the external surface of the side cover. Accordingly, degradation in accessibility to the storage box from the operating member can be inhibited; simultaneously, the storage box can be efficiently disposed inside the side cover. Besides, the operating member is disposed to be unlikely to be visible by a third party in comparison with that disposed on the external surface of the side cover; hence, the storage box can be enhanced in anti-crime performance. Furthermore, the operating member can be inhibited from being complicated in structure in comparison with that disposed remote from the storage portion.

The operating member is disposed on an external surface of a vehicle width directionally inner portion of the storage box. In this case, the operating member can be disposed near to the storage portion. Hence, the operating member can be inhibited from being complicated in structure; simultaneously, degradation in accessibility to the storage box from the operating member can be inhibited.

The operating member may be disposed below an upper surface of the side cover and may overlap with the upper surface of the side cover in a vehicle plan view. In this case, the operating member is disposed to be unlikely to be visible by a third party; hence, the storage box can be enhanced in anti-crime performance. Besides, the operating member can be inhibited from being splashed with water.

The operating member is disposed on an outer side than an external surface of a vehicle width directionally inner portion of the side cover in the vehicle width direction. In this case, the operating member is disposed to be unlikely to be visible by a third party; hence, the storage box can be enhanced in anti-crime performance.

The operating member may be accessible from a space between the steering device and the side cover. In this case, the space between the steering device and the side cover can be effectively utilized. Besides, degradation in accessibility to the storage box from the operating member can be inhibited.

The side cover may include an inner cover portion configured to cover the external surface of the vehicle width directionally inner portion of the storage box. The inner cover portion may include an opening for operating the operating member from the inner side of the inner cover portion in the vehicle width direction. In this case, the inner cover portion makes the operating member unlikely to be visible by a third party; hence, the storage box can be enhanced in anti-crime performance.

The operating member may be a push button pressable to the outer side from the inner side in the vehicle width direction. In this case, for instance, a rider is enabled to easily operate the operating member, while riding on the vehicle.

The operating member may overlap with the lid portion in the vehicle plan view when the lid portion is closed. In this case, the lid portion makes the operating member unlikely to be visible by a third party; hence, the storage box can be enhanced in anti-crime performance. Besides, the operating member can be inhibited from being splashed with water.

The side cover may further include a lid cover fixed to the lid portion outside the lid portion so as to be unitarily pivotable therewith. In this case, the lid cover makes the storage box unlikely to be visible by a third party. Hence, the storage box can be enhanced in anti-crime performance; simultaneously, the vehicle can be intended to be enhanced in external aesthetics. Besides, the storage box can be protected by the lid cover.

The side cover may further include a side cover body in which the storage portion of the storage box is disposed. The lid cover and the side cover body may form a labyrinth structure. In this case, the storage box can be enhanced in waterproof performance.

The storage box may further include a shaft portion configured to pivotably support the lid portion. The shaft portion may extend in a vehicle back-and-forth direction. The lid portion may be configured to be opened outward in the vehicle width direction with respect to the storage portion. In this case, it is made easy to reliably produce a space for the storage portion in the vehicle back-and-forth direction. Besides, it is made easy to reliably produce a space for opening and closing the lid portion.

The opening may be opened upward and outward in the vehicle width direction. In this case, it is made easy to put/take the item in/out of the storage portion.

The storage box may further include an upper surface portion. The upper surface portion may extend from the storage portion in a direction of closing the lid portion and may be disposed below an upper end of the storage portion. In this case, a step is configured to be formed between the upper end of the storage portion and the upper surface portion; hence, it is made possible to inhibit such a fluid as water from intruding into the storage portion from the upper surface portion in the storage box.

The operating member may be disposed below the upper surface portion. In this case, the upper surface portion makes the operating member unlikely to be visible by a third party; hence, the storage box can be enhanced in anti-crime performance. Besides, the operating member can be inhibited from being splashed with water.

The steering device may include a handle. The storage box may be disposed below a turning trajectory of the handle. In this case, compared to a configuration that the operating member is disposed on the external surface of the side cover, for instance, a clearance can be reliably produced between the handle and the operating member, while the storage box can be compactly disposed below the turning trajectory of the handle.

Overall, according to the present invention, it is made possible to provide a straddled vehicle, whereby it is possible to efficiently dispose a storage box inside a side cover, and simultaneously, to inhibit degradation in accessibility to the storage box from an operating member for causing a lid portion of the storage box to perform an opening action.

### Brief description of the drawings

FIG. 1 is a side view of a straddled vehicle.
FIG. 2 is a front view of the straddled vehicle.
FIG. 3 is a plan view of a handle and the surroundings thereof.
FIG. 4 is a perspective view of a storage box.
FIG. 5 is a cross-sectional view of the storage box.
FIG. 6 is a partial perspective view of the storage box.
FIG. 7 is a partial perspective view of the storage box.
FIG. 8 is a diagram for explaining a labyrinth structure.
FIG. 9 is a perspective view of a handle and the surroundings thereof.
FIG. 10 is a view of an inner cover portion and the surroundings thereof seen from an inner side in a vehicle width direction.
FIG. 11 is a diagram for explaining a modification of an operating member.

### Embodiments of the invention

A preferred embodiment of a straddled vehicle according to an aspect of the present invention will be hereinafter explained with reference to drawings. It should be noted that in the following explanation, terms indicating such directions as "back and forth", "up and down", and "right and left" are explained based on directions seen from a rider in operation of a straddled vehicle 1. Therefore, a right-and-left direction is synonymous with a vehicle width direction. Besides, the term "outer side in a vehicle width direction" means a side far from the center of the straddled vehicle 1 in the vehicle width direction. By contrast, the term "inner side in the vehicle width direction" means a side near to the center of the straddled vehicle 1 in the vehicle width direction.

In the present specification, a condition of a constituent element extending in a vehicle back-and-forth direction (extending forward and/or rearward) is not limited to a condition of the constituent element extending in a direction orthogonal to a vehicle up-and-down direction and the vehicle width direction. The condition of the constituent element extending in the vehicle back-and-forth direction encompasses a condition of the constituent element extending to tilt relative to the vehicle up-and-down direction and/or the vehicle width direction. When described in detail, the vehicle back-and-forth direction encompasses a direction closer to the vehicle back-and-forth direction. The direction closer to the vehicle back-and-forth direction refers to, for instance, a direction that forms angles, the smaller of which is 45 degrees or less, together with the vehicle back-and-forth direction. The settings herein described are also true of the vehicle width direction (rightward and/or leftward directions) and the vehicle up-and-down direction (upward and/or downward directions).

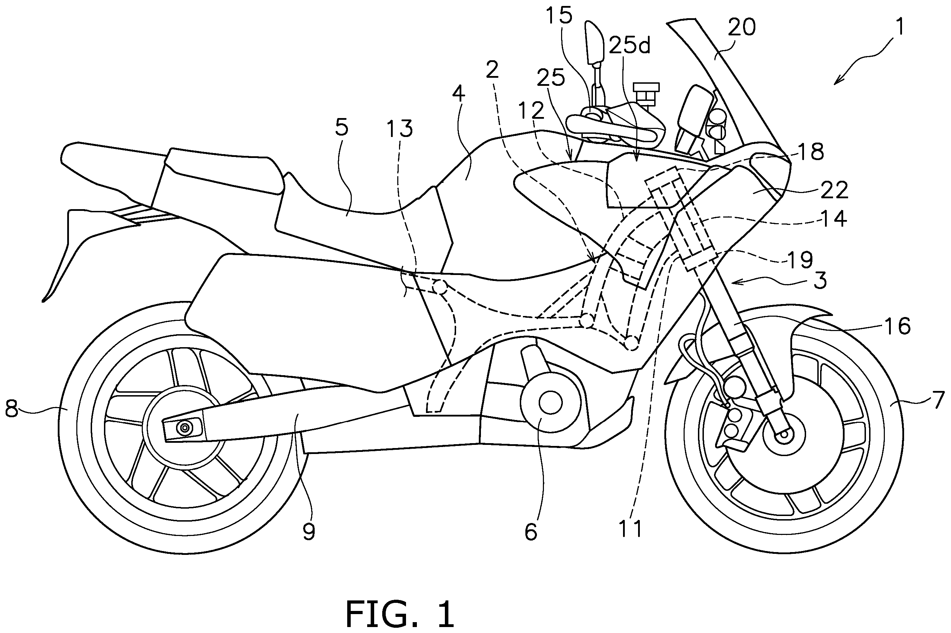

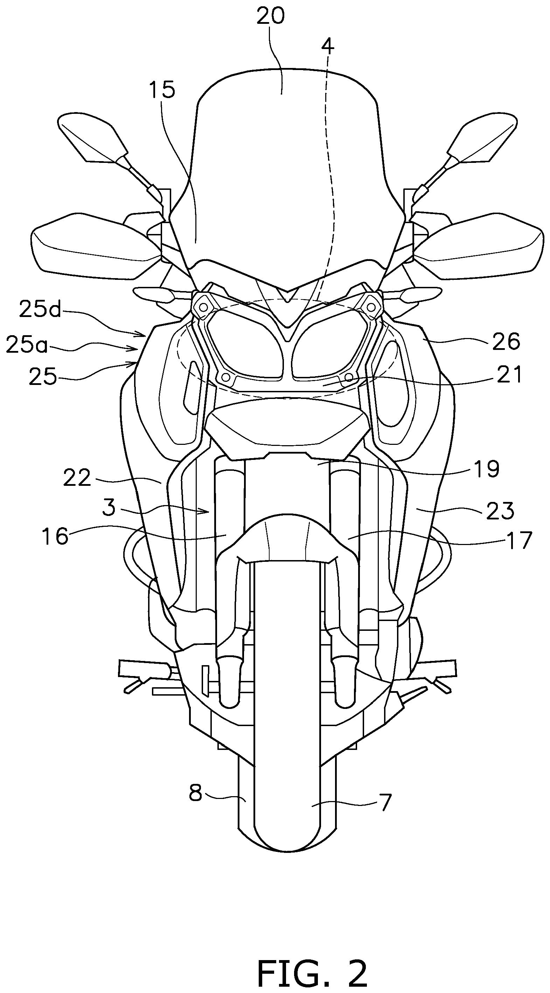

FIG. 1 is a side view of the straddled vehicle 1. FIG. 2 is a front view of the straddled vehicle 1. The straddled vehicle 1 includes a vehicle body frame 2, a steering device 3, a tank-like member 4, a seat 5, a power unit 6, a front wheel 7, and a rear wheel 8.

The vehicle body frame 2 includes a head pipe 11, a main frame 12, and a rear frame 13. The main frame 12 is connected to the head pipe 11. The main frame 12 extends rearward from the head pipe 11. The rear frame 13 is connected to the main frame 12. The rear frame 13 extends rearward from the main frame 12.

The steering device 3 is supported by the head pipe 11 so as to be turnable. The steering device 3 supports the front wheel 7 such that the front wheel 7 is made rotatable. The steering device 3 includes a steering shaft 14, a handle 15, a right front fork 16, a left front fork 17, an upper bracket 18, and a lower bracket 19.

The steering shaft 14 is inserted into the head pipe 11. The handle 15 is disposed further on the upper side than the head pipe 11. The handle 15 is connected to the steering shaft 14. The handle 15 extends in the right-and-left direction. The right and left front forks 16 and 17 are connected to the steering shaft 14 through the upper and lower brackets 18 and 19. The right and left front forks 16 and 17 support the front wheel 7 such that the front wheel 7 is made rotatable.

The tank-like member 4 is disposed behind the head pipe 11. The tank-like member 4 is supported by the main frame 12. In the present preferred embodiment, the tank-like member 4 is a fuel tank. FIG. 2 shows the tank-like member 4 in a schematic manner.

The seat 5 is disposed behind the tank-like member 4. The seat 5 is disposed above the rear frame 13.

The power unit 6 is disposed below the tank-like member 4. The power unit 6 is supported by the main frame 12. The power unit 6 includes, for instance, an internal combustion engine. The power unit 6 generates a drive force. In the present preferred embodiment, the drive force generated by the power unit 6 is transferred to the rear wheel 8.

The rear wheel 8 is supported by the main frame 12 through a swing arm 9 supported by the main frame 12. The rear wheel 8 is supported by the swing arm 9 so as to be rotatable. The rear wheel 8 is driven by the drive force generated by the power unit 6.

The straddled vehicle 1 includes a wind shield 20, a front cowl 21, a right side cowl 22, a left side cowl 23, a right side cover 25 (exemplary side cover), and a left side cover 26. The wind shield 20 is disposed above the front cowl 21.

The front cowl 21 is disposed in front of the head pipe 11. The right side cowl 22 is disposed on the right of the head pipe 11. As shown in FIG. 1, the right side cowl 22 extends forward from the right side cover 25 in a vehicle side view. The right side cowl 22 extends downward from the right side cover 25 in the vehicle side view. The left side cowl 23 is disposed on the left of the head pipe 11. The left side cowl 23 extends forward from the left side cover 26 in the vehicle side view. The left side cowl 23 extends downward from the left side cover 26 in the vehicle side view.

The right side cover 25 is connected to the right side cowl 22. The right side cover 25 is disposed above the right side cowl 22. The right side cover 25 is disposed not only lateral to the steering device 3 but also on one side of the head pipe 11 in the vehicle width direction. The right side cover 25 is disposed on the right of the head pipe 11. The right side cover 25 overlaps with the head pipe 11 in the vehicle side view. The right side cover 25 is remote from the steering device 3 in the vehicle width direction. The right side cover 25 is disposed on the right of the steering device 3. The right side cover 25 overlaps with the steering shaft 14 of the steering device 3 in the vehicle side view. The right side cover 25 is fixed to the vehicle body frame 2 through a bracket (not shown in the drawings). The right side cover 25 may be fixed to the tank-like member 4.

The right side cover 25 extends in the vehicle back-and-forth direction. The right side cover 25 extends further rearward than the right side cowl 22. The right side cover 25 is disposed between the right side cowl 22 and the tank-like member 4 in the vehicle back-and-forth direction. The right side cover 25 is disposed lateral to the tank-like member 4. In the present preferred embodiment, a rear portion of the right side cover 25 is disposed laterally on the right of the tank-like member 4 and overlaps with the tank-like member 4 in the vehicle side view.

The left side cover 26 is connected to the left side cowl 23. The left side cover 26 is disposed above the left side cowl 23. The left side cover 26 is disposed not only lateral to the steering device 3 but also on the other side of the head pipe 11 in the vehicle width direction. The left side cover 26 is disposed on the left of the head pipe 11. The left side cover 26 overlaps with the head pipe 11 in the vehicle side view. The left side cover 26 is remote from the steering device 3 in the vehicle width direction. The left side cover 26 is disposed on the left of the steering device 3. The left side cover 26 overlaps with the steering shaft 14 of the steering device 3 in the vehicle side view.

The left side cover 26 extends in the vehicle back-and-forth direction. The left side cover 26 extends further rearward than the left side cowl 23. The left side cover 26 is disposed between the left side cowl 23 and the tank-like member 4 in the vehicle back-and-forth direction. The left side cover 26 is disposed lateral to the tank-like member 4. In the present preferred embodiment, a rear portion of the left side cover 26 is disposed laterally on the left of the tank-like member 4 and overlaps with the tank-like member 4 in the vehicle side view.

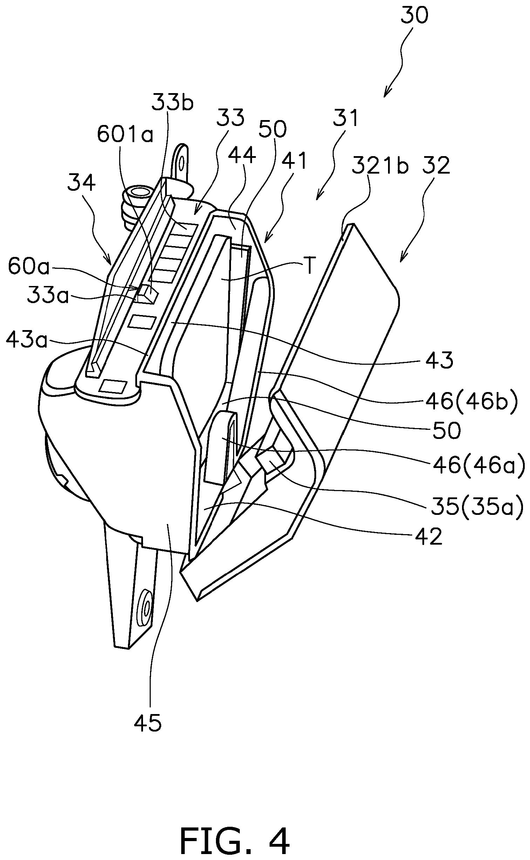

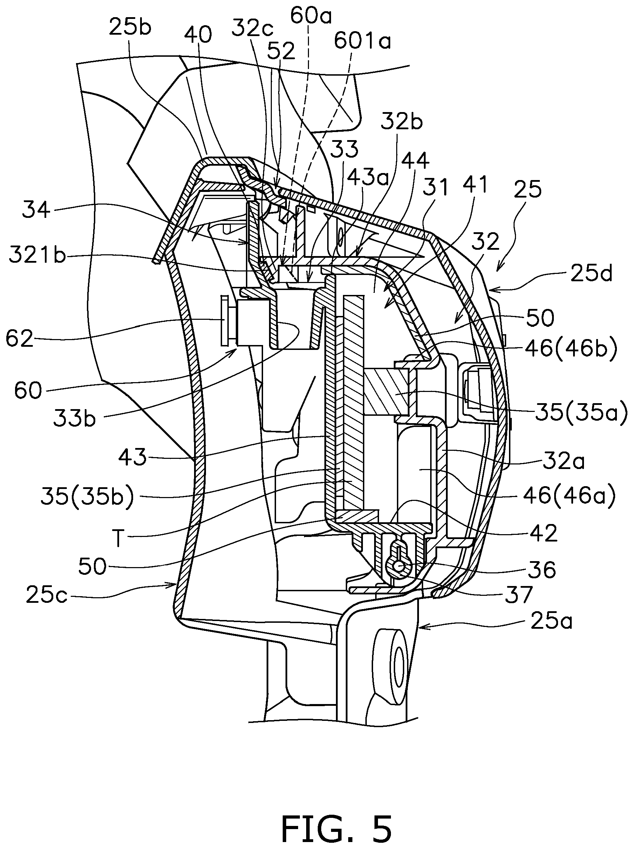

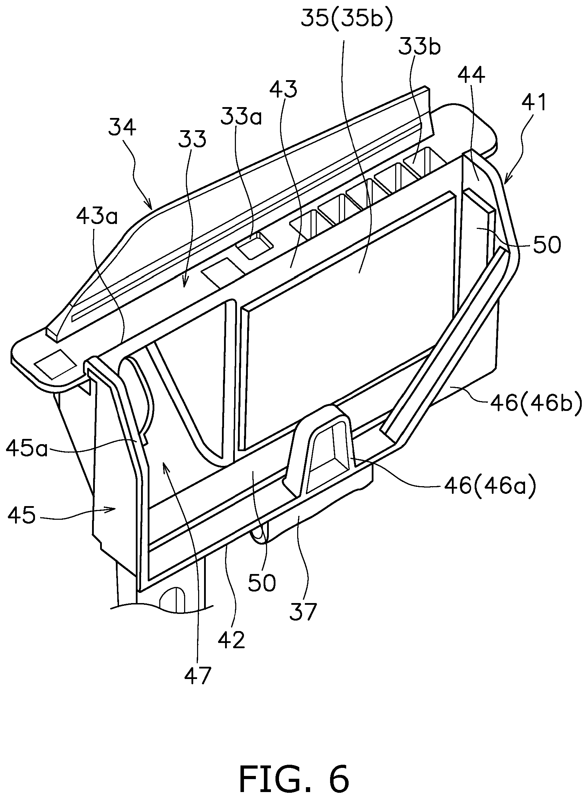

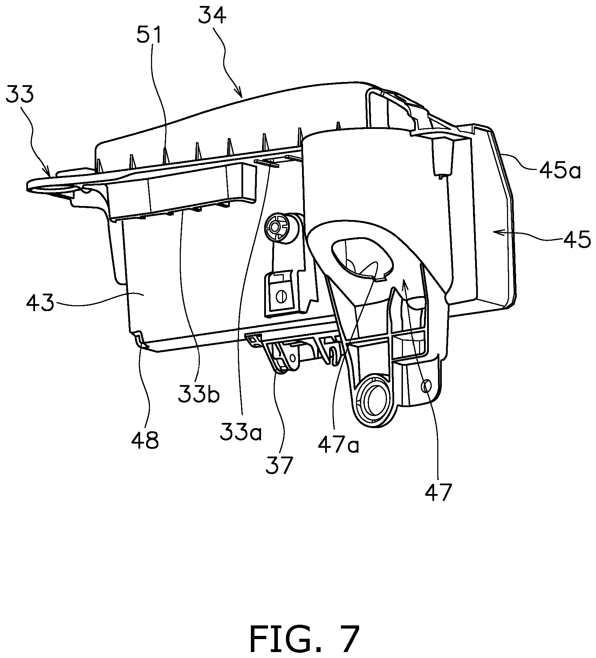

The straddled vehicle 1 includes a storage box 30. FIG. 4 is a perspective view of the storage box 30. FIG. 5 is a cross-sectional view of the storage box 30. FIGS. 6 and 7 are partial perspective views of the storage box 30. The storage box 30 is capable of storing one or more items. The storage box 30 is capable of storing, for instance, a portable information terminal T. The portable information terminal T is an exemplary item to be stored in the storage box 30.

The storage box 30 is disposed below a turning trajectory of the handle 15. The storage box 30 is disposed further on the right side than the head pipe 11. The storage box 30 is disposed laterally on the right of the head pipe 11. The storage box 30 overlaps with the head pipe 11 in the vehicle side view.

The storage box 30 is disposed on the right of the steering device 3. The storage box 30 overlaps with the steering shaft 14 of the steering device 3 in the vehicle side view. The storage box 30 is disposed further on the upper side than the lower bracket 19. The storage box 30 is disposed inside the right side cover 25. The storage box 30 is disposed further on the front side than the tank-like member 4. The storage box 30 does not overlap with the tank-like member 4 in the vehicle side view. The storage box 30 overlaps with the tank-like member 4 in the vehicle front view.

The storage box 30 includes a storage portion 31, a lid portion 32, an upper surface portion 33, an opposed portion 34, at least one elastic member 35, a shaft portion 36, and a shaft support portion 37.

The storage portion 31 is disposed on the right of the steering device 3. The storage portion 31 is fixed to a member configured not to be turned together with the steering device 3. The storage portion 31 is fixed to the right side cover 25. The storage portion 31 is capable of storing the portable information terminal T. The dimension of the storage portion 31 is greater in the vehicle back-and-forth direction than not only in the vehicle up-and-down direction but also in the vehicle width direction. The dimension of the storage portion 31 is greater in the vehicle up-and-down direction than in the vehicle width direction.

The storage portion 31 includes an opening 41, a bottom surface portion 42, an inner sidewall 43, a front surface portion 44, a rear surface portion 45, at least one restriction portion 46, an attachment portion 47, and a drain hole 48 (see FIG. 7).

The opening 41 serves as an opening for putting-in and taking-out of the item and is opened not only upward but also outward in the vehicle width direction. The opening 41 is defined by the inner sidewall 43, the front surface portion 44, and the rear surface portion 45.

When the lid portion 32 is opened, the storage portion 31 is uncovered upward. When the lid portion 32 is opened, the storage portion 31 is uncovered outward in the vehicle width direction except for at the restriction portion (or portions) 46. It should be noted that in the following explanation, the state that the lid portion 32 is opened will be referred to as "an opened state", whereas the state that the lid portion 32 is closed will be referred to as "a closed state". In other words, the opened state means that the opening 41 is opened (uncovered), whereas the closed state means that the opening 41 is closed (covered). FIG. 4 shows the opened state, whereas FIG. 5 shows the closed state.

The bottom surface portion 42 serves as a portion on which the portable information terminal T is put. The portable information terminal T is put on the bottom surface portion 42 such that the lengthwise direction thereof is matched with the vehicle back-and-forth direction. The bottom surface portion 42 is disposed lateral to the head pipe 11. The bottom surface portion 42 extends in a direction intersecting with the vehicle up-and-down direction. The dimension of the bottom surface portion 42 is greater in the vehicle back-and-forth direction than in the vehicle width direction. The bottom surface portion 42 tilts down forward. The bottom surface portion 42 extends to gradually approach to the head pipe 11 from rear to front. The front end of the bottom surface portion 42 is located further on the inner side than the rear end thereof in the vehicle width direction. The front end of the bottom surface portion 42 is located further on the rear side than that of the right side cover 25. The rear end of the bottom surface portion 42 is located further on the rear side than the head pipe 11. The rear end of the bottom surface portion 42 is located further on the front side than that of the right side cover 25.

The inner sidewall 43 extends in a direction intersecting with the vehicle width direction. The inner sidewall 43 extends in approximately both the vehicle up-and-down direction and the vehicle back-and-forth direction. The inner sidewall 43 is disposed between the front surface portion 44 and the rear surface portion 45 in the vehicle back-and-forth direction. The inner sidewall 43 is connected to the bottom surface portion 42, the front surface portion 44, and the rear surface portion 45. The inner sidewall 43 extends upward from a vehicle width directionally inner portion of the bottom surface portion 42. The inner sidewall 43 extends to gradually approach to the head pipe 11 from rear to front. The front end of the inner sidewall 43 is located further on the inner side than the rear end thereof in the vehicle width direction. In the closed state, the inner sidewall 43 is opposed to the lid portion 32 in the vehicle width direction.

The front surface portion 44 extends in a direction intersecting with the vehicle back-and-forth direction. The front surface portion 44 extends upward from the front end of the bottom surface portion 42. The front surface portion 44 extends outward from the front end of the inner sidewall 43 in the vehicle width direction.

The rear surface portion 45 extends in a direction intersecting with the vehicle back-and-forth direction. The rear surface portion 45 is opposed to the front surface portion 44 in the vehicle back-and-forth direction. The rear surface portion 45 extends upward from the rear end of the bottom surface portion 42. The rear surface portion 45 extends outward from the rear end of the inner sidewall 43 in the vehicle width direction. The rear surface portion 45 is located further on the rear side than the head pipe 11. The rear surface portion 45 is located further on the front side than the rear end of the right side cover 25. The rear surface portion 45 is disposed further on the rear side than the restriction portion (or portions) 46. The rear surface portion 45 defines part of the opening 41. As shown in FIG. 6, the rear surface portion 45 includes an edge 45a extending not only downward but also outward in the vehicle width direction. The edge 45a is disposed on the upper end of a vehicle width directionally outer portion of the rear surface portion 45. The edge 45a defines part of the opening 41.

The restriction portion (or portions) 46 restricts the portable information terminal T, put on the bottom surface portion 42, from moving outward in the vehicle width direction. The restriction portion (or portions) 46 is disposed further on the outer side than the inner sidewall 43 in the vehicle width direction. The restriction portion (or portions) 46 is opposed to the inner sidewall 43 in the vehicle width direction. The portable information terminal T is stored in the storage portion 31 so as to stand between the inner sidewall 43 and the restriction portion (or portions) 46.

The one or more restriction portions 46 include a first restriction portion 46a and a second restriction portion 46b. The first restriction portion 46a extends upward from the bottom surface portion 42. The first restriction portion 46a is disposed further on the lower side than the upper end of the inner sidewall 43. The second restriction portion 46b is disposed remote from the first restriction portion 46a in the vehicle back-and-forth direction. The second restriction portion 46b is disposed further on the front side than the first restriction portion 46a. The second restriction portion 46b extends upward from the bottom surface portion 42 and is connected to the front surface portion 44. The upper edge of the second restriction portion 46b extends not only rearward but also downward.

The attachment portion 47 serves as a portion for attaching a power supply device (not shown in the drawings). The power supply device is, for instance, a power socket provided as an accessory socket. The power supply device may connect therethrough the portable information terminal T and an electronic device installed in the straddled vehicle 1 such that intercommunication of data is enabled between the portable information terminal T and the electronic device. The attachment portion 47 is formed by bulging a rear portion of the inner sidewall 43 inward in the vehicle width direction. The attachment portion 47 includes an attachment hole 47a to which the power supply device is attached. The attachment hole 47a is disposed further on the inner side than the bottom surface portion 42 in the vehicle width direction. The attachment hole 47a is disposed below the upper surface portion 33.

As shown in FIG. 7, the drain hole 48 is disposed in the bottom surface portion 42. The drain hole 48 is provided in the vehicle width directionally inner one of the front corners of the bottom surface portion 42.

Cushioning members 50 are disposed on the upper surface of the bottom surface portion 42, the rear surface of the front surface portion 44, the front surface of the rear surface portion 45, and the internal surface of the lid portion 32, respectively.

The lid portion 32 closes (covers) and opens (uncovers) the opening 41. In the closed state, the lid portion 32 covers the bottom surface portion 42, the inner sidewall 43, the front surface portion 44, the rear surface portion 45, and the upper surface portion 33. The lid portion 32 is supported by the shaft portion 36 so as to be pivotable. The lid portion 32 is pivotable between an opened position shown in FIG. 4 and a closed position shown in FIG. 5. The lid portion 32 is set to be pivotable in an angular range of approximately 20° to 30°. It should be noted that the lid portion 32 is preferably pivotable in an angular range of 45° or less. The lid portion 32 is pivotable with respect to the right side cover 25. The lid portion 32 is configured to be opened outward in the vehicle width direction with respect to the storage portion 31. The lid portion 32 is configured to be opened outward in the vehicle width direction with respect to the inner sidewall 43. When moved from the closed position to the opened position, the lid portion 32 is opened outward in the vehicle width direction. As shown in FIGS. 4 and 5, an upper portion of the lid portion 32 is located further on the outer side in the vehicle width direction in the opened position than in the closed position. The lid portion 32 is biased to the opened position by a hinge spring (not shown in the drawings) disposed below the storage portion 31.

As shown in FIG. 5, the lid portion 32 includes a wall portion 32a, a canopy portion 32b, and an engaged portion 32c. In the closed state, the wall portion 32a extends in a direction intersecting with the vehicle width direction. In the closed state, the wall portion 32a is opposed to the inner sidewall 43 in the vehicle width direction. The canopy portion 32b extends inward from the upper end of the wall portion 32a in the vehicle width direction. In the closed state, the canopy portion 32b covers the upper surface portion 33. In the closed state, a distal end portion 321b, which is a vehicle width directionally inner end portion of the canopy portion 32b, is located further on the inner side than the inner sidewall 43 in the vehicle width direction. The engaged portion 32c is provided on the lower surface of the distal end portion 321b of the canopy portion 32b. The engaged portion 32c extends downward from the lower surface of the distal end portion 321b of the canopy portion 32b. The engaged portion 32c is shaped to recess from the inner side to the outer side in the vehicle width direction.

The upper surface portion 33 extends in a direction intersecting with the vehicle up-and-down direction. The upper surface portion 33 extends from the storage portion 31 in a direction of closing the lid portion 32. The upper surface portion 33 extends inward from the storage portion 31 in the vehicle width direction. In the vicinity of the upper end of the inner sidewall 43 of the storage portion 31, the upper surface portion 33 extends inward from the inner sidewall 43 in the vehicle width direction. The upper surface portion 33 is disposed further on the lower side than the aforementioned upper end (43a) of the inner sidewall 43 (exemplary upper end of a storage portion). The upper end 43a of the inner sidewall 43 protrudes further upward than the upper surface portion 33. Because of this, a step is provided between the upper surface portion 33 and the inner sidewall 43. In the closed state, the upper surface portion 33 is disposed below the canopy portion 32b so as to be covered therewith.

The upper surface portion 33 includes a through hole 33a and a plurality of drain holes 33b. The through hole 33a and the plural drain holes 33b are disposed between the opposed portion 34 and the storage portion 31. The through hole 33a and the plural drain holes 33b are disposed between the opposed portion 34 and the inner sidewall 43. The through hole 33a and the plural drain holes 33b penetrate the upper surface portion 33 in the vehicle up-and-down direction. The through hole 33a is provided in the vicinity of the middle of the upper surface portion 33 in the vehicle back-and-forth direction. The plural drain holes 33b are provided on the front side and the rear side of the through hole 33a.

The opposed portion 34 is connected to the upper surface portion 33. The opposed portion 34 extends upward from the upper surface portion 33. The opposed portion 34 is disposed further on the inner side than the plural drain holes 33b in the vehicle width direction. In the closed state, the opposed portion 34 is opposed to the distal end portion 321b of the canopy portion 32b. In the closed state, a seal member 40 is disposed between the opposed portion 34 and the distal end portion 321b of the canopy portion 32b so as to seal a gap produced therebetween. The seal member 40 is fixed to the opposed portion 34. The seal member 40 may be fixed to the distal end portion 321b of the canopy portion 32b. As shown in FIG. 7, a plurality of ribs 51 are provided on the inner side of the opposed portion 34 in the vehicle width direction so as to be connected to the upper surface portion 33 and the opposed portion 34.

In the closed state, the portable information terminal T is pressed by the elastic member (or members) 35 in the thickness direction thereof (herein corresponding to the vehicle width direction). Accordingly, the portable information terminal T is retained in the storage portion 31.

The one or more elastic members 35 include a first elastic member 35a and a second elastic member 35b. The first elastic member 35a is disposed on the lid portion 32. The first elastic member 35a is fixed to the internal surface of the wall portion 32a of the lid portion 32. In the closed state, the first elastic member 35a is disposed above the first restriction portion 46a. The first elastic member 35a, at least in part, is disposed at an identical height to the center of the inner sidewall 43 in the vehicle up-and-down direction. The second elastic member 35b is disposed on the inner sidewall 43. The second elastic member 35b is fixed to the surface of the inner sidewall 43 on the outer side of the inner sidewall 43 in the vehicle width direction. In the closed state, the second elastic member 35b is opposed to the first elastic member 35a in the vehicle width direction.

The shaft portion 36 supports the lid portion 32 such that the lid portion 32 is made pivotable. The shaft portion 36 extends in the vehicle back-and-forth direction. In the present preferred embodiment, the shaft portion 36 extends to tilt with respect to not only the vehicle up-and-down direction but also the vehicle width direction. The shaft portion 36 extends from the vehicle rear side to the vehicle front side so as to tilt down to the inner side in the vehicle width direction. It should be noted that the shaft portion 36 may extend in parallel to the vehicle back-and-forth direction, or alternatively, may extend to tilt with respect to either the vehicle up-and-down direction or the vehicle width direction.

The shaft portion 36 is disposed below the storage portion 31. In other words, the axis of the shaft portion 36 extends in the vehicle back-and-forth direction. The shaft portion 36 overlaps with the storage portion 31 in a vehicle plan view. The shaft portion 36 is supported by the shaft support portion 37. The shaft portion 36 is disposed further on the outer side than the inner sidewall 43 in the vehicle width direction.

The shaft support portion 37 is disposed below the storage portion 31. The shaft support portion 37 is provided on a lower portion of the bottom surface portion 42.

Here, the right side cover 25 includes a side cover body 25a, an upper cover portion 25b, an inner cover portion 25c, and a lid cover 25d.

The side cover body 25a is a portion in which the storage portion 31 of the storage box 30 is disposed. The storage portion 31 is fixed to the side cover body 25a. The side cover body 25a extends in the vehicle back-and-forth direction. The front end of the side cover body 25a is disposed further on the front side than the head pipe 11. The rear end of the side cover body 25a is disposed laterally on the right of the tank-like member 4 and overlaps with the tank-like member 4 in the vehicle side view.

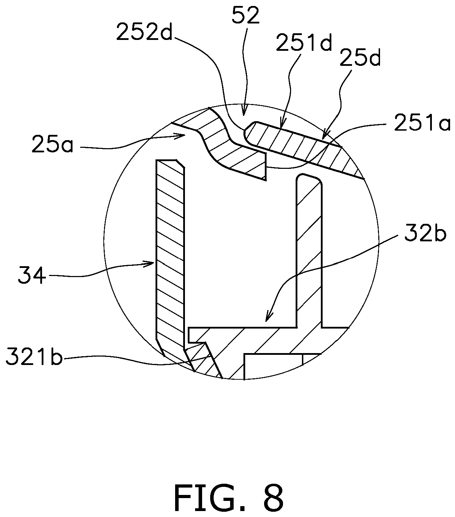

As shown in FIG. 8, the side cover body 25a includes a side edge 251a disposed above the canopy portion 32b of the lid portion 32. The side edge 251a is located further on the outer side than the upper cover portion 25b in the vehicle width direction.

The upper cover portion 25b is disposed further on the upper side than the head pipe 11. The upper cover portion 25b is connected to the side cover body 25a. The upper cover portion 25b is provided as a member separated from the side cover body 25a and is fixed to the side cover body 25a. The upper cover portion 25b covers the upper edge of a vehicle width directionally inner portion of the side cover body 25a. The upper cover portion 25b is disposed further on the upper side than the storage box 30. The upper cover portion 25b extends not only in the vehicle back-and-forth direction but also in the vehicle width direction. The upper cover portion 25b is disposed in part above the upper surface portion 33 and the opposed portion 34.

The inner cover portion 25c is disposed between the steering device 3 and the storage box 30 in the vehicle width direction. The inner cover portion 25c covers the external surface of a vehicle width directionally inner portion of the storage box 30. The inner cover portion 25c is disposed on the inner side of the inner sidewall 43 in the vehicle width direction. The inner cover portion 25c is disposed below the upper cover portion 25b. The inner cover portion 25c extends in the vehicle back-and-forth direction. The inner cover portion 25c extends downward from a vehicle width directionally inner portion of the upper cover portion 25b.

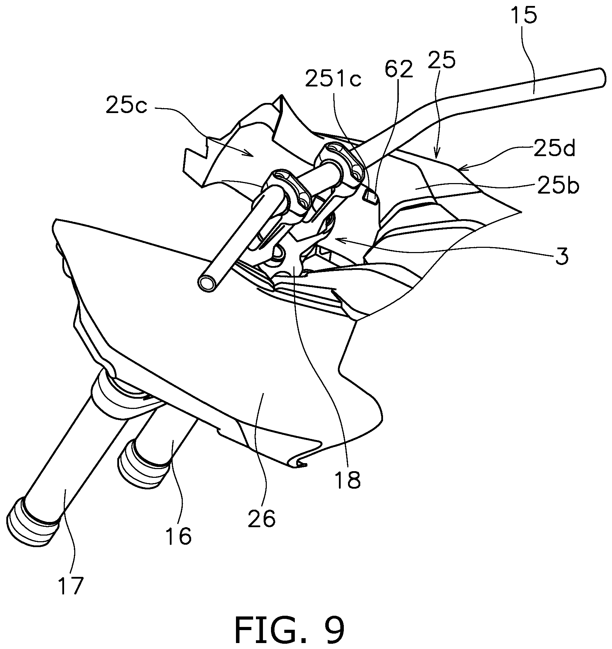

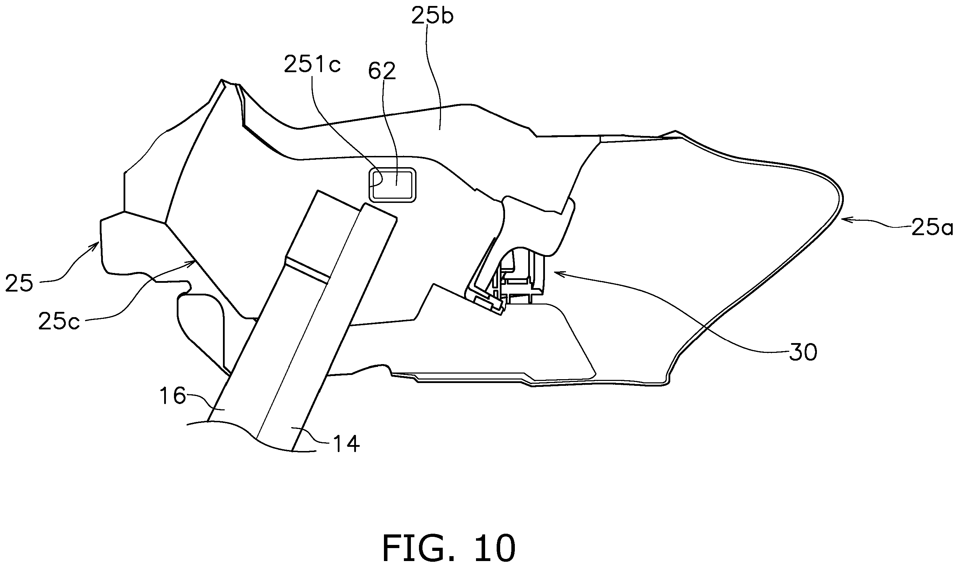

As shown in FIG. 9, the inner cover portion 25c is shaped to avoid contact with the steering device 3. The inner cover portion 25c is shaped to curve from the inner side to the outer side in the vehicle width direction. The inner cover portion 25c is fixed to the side cover body 25a and the upper cover portion 25b. As shown in FIGS. 9 and 10, the inner cover portion 25c includes an opening 251c for operating an operating member 62 (to be described) from the inner side of the inner cover portion 25c in the vehicle width direction. The opening 251c is shaped to penetrate the inner cover portion 25c in the vehicle width direction. The opening 251c overlaps with the storage box 30 in the vehicle side view. It should be noted that in FIG. 5, the opening 251c is omitted in illustration.

The lid cover 25d is fixed to the lid portion 32 outside the lid portion 32 so as to be unitarily pivotable therewith. For example, at least one resin rivet is inserted into the lid cover 25d from the inside of the lid portion 32, whereby the lid cover 25d is fixed to the lid portion 32. For example, the lid cover 25d is disposed to be flush with the side cover body 25a at a portion thereof adjoining the side cover body 25a. The lid cover 25d is disposed further on the outer side than the upper cover portion 25b in the vehicle width direction. The lid cover 25d is disposed further on the lower side than the upper cover portion 25b. As shown in FIG. 8, a distal end portion 252d, which is a vehicle width directional distal end portion of an upper portion 251d of the lid cover 25d, is disposed above the side cover body 25a. It should be noted that in FIG. 4, the lid cover 25d is omitted in illustration.

As shown in FIG. 5, a labyrinth structure 52 is formed by the lid cover 25d and the side cover body 25a. When described in detail, as shown in FIG. 8, the distal end portion 252d, which is the vehicle width directional distal end portion of the upper portion 251d of the lid cover 25d, forms part of the labyrinth structure 52. The labyrinth structure 52 is formed by the side edge 251a of the side cover body 25a and the distal end portion 252d of the upper portion 251d of the lid cover 25d. The side edge 251a overlaps with the distal end portion 252d of the upper portion 251d of the lid cover 25d in the vehicle plan view. The side edge 251a is disposed below the distal end portion 252d of the upper portion 251d of the lid cover 25d.

In the closed state, the distal end portion 321b, which is the vehicle width directionally distal end portion of the lid portion 32, does not overlap at least in part with the distal end portion 252d of the upper portion 251d of the lid cover 25d in the vehicle plan view. In FIG. 8, the distal end portion 321b, which is the vehicle width directionally distal end portion of the lid portion 32, is located further on the inner side than the distal end portion 252d of the upper portion 251d of the lid cover 25d and the side edge 251a of the side cover body 25a in the vehicle width direction.

The straddled vehicle 1 includes an opening and closing mechanism 60 and the operating member 62. When the lid portion 32 is moved to the closed position, the opening and closing mechanism 60 keeps the lid portion 32 in the closed state. The opening and closing mechanism 60 releases the closed state in response to operating the operating member 62.

As shown in FIGS. 4 and 5, the opening and closing mechanism 60 includes an engaging protrusion 60a. The engaging protrusion 60a is disposed to be protrusible and retractable with respect to the through hole 33a. The engaging protrusion 60a is biased upward by an urging member (not shown in the drawings). In the closed state, the engaging protrusion 60a protrudes upward from the through hole 33a so as to engage with the engaged portion 32c of the lid portion 32. Accordingly, the lid portion 32 is kept in the closed state, while being restricted from moving to the opened position. On the other hand, when the operating member 62 is operated, the engaging protrusion 60a is pulled into the through hole 33a. When the operating member 62 is operated in the closed state, the engaged portion 32c of the lid portion 32 is released from being engaged with the engaging protrusion 60a. Accordingly, the lid portion 32 is moved from the closed position to the opened position.

The engaging protrusion 60a includes a slope 601a. The slope 601a is provided on the upper surface of the engaging protrusion 60a. The slope 601a tilts down to the outer side in the vehicle width direction. When the lid portion 32 is moved from the opened position to the closed position, the distal end portion 321b of the canopy portion 32b of the lid portion 32 contacts with the slope 601a from the outer side in the vehicle width direction. Accordingly, the engaging protrusion 60a is pressed downward to be pulled into the through hole 33a. When the engaged portion 32c of the lid portion 32 gets over the engaging protrusion 60a to the inner side in the vehicle width direction, the engaging protrusion 60a engages with the engaged portion 32c of the lid portion 32, whereby the lid portion 32 is restricted from moving to the opened position.

The operating member 62 serves as a member to be operated for causing the lid portion 32 to perform an opening action. The operating member 62 is a member to be operated for pulling the engaging protrusion 60a into the through hole 33a. The operating member 62 is coupled to the opening and closing mechanism 60. The operating member 62 is a member operable by pressing. The operating member 62 is, for instance, a push button pressable from the inner side to the outer side in the vehicle width direction. As shown in FIG.9, the operating member 62 is accessible from a space between the steering device 3 and the right side cover 25. The operating member 62 is disposed to be operable through the opening 251c by the rider with the thumb of the right hand put on the upper cover portion 25b.

The operating member 62 is disposed remote from the right side cover 25 not only on one side of the head pipe 11 in the vehicle width direction but also on the inner side of the storage box 30 in the vehicle width direction. In the present preferred embodiment, the operating member 62 is disposed on the right of the head pipe 11. The operating member 62 is disposed further on the rear side than the head pipe 11. The operating member 62 is disposed further on the upper side than the steering shaft 14.

A shown in FIG. 5, the operating member 62 is disposed further on the outer side than the external surface of a vehicle width directionally inner portion of the right side cover 25 in the vehicle width direction. The operating member 62 is disposed further on the outer side than the opening 251c of the inner cover portion 25c in the vehicle width direction. The operating member 62 is disposed remote from the inner cover portion 25c. The operating member 62 overlaps with the storage box 30 in the vehicle side view. The operating member 62 is disposed between the inner cover portion 25c and the inner sidewall 43 in the vehicle width direction. The operating member 62 is disposed on the external surface of a vehicle width directionally inner portion of the storage box 30. The operating member 62 is disposed on the external surface of a vehicle width directionally inner portion of the inner sidewall 43. In the closed state, the operating member 62 is opposed to the lid portion 32 in the vehicle width direction. The operating member 62 is disposed in front of the attachment portion 47. The operating member 62 overlaps at least in part with the opening 251c in the vehicle side view. In the present preferred embodiment, the operating member 62 entirely overlaps with the opening 251c in the vehicle side view.

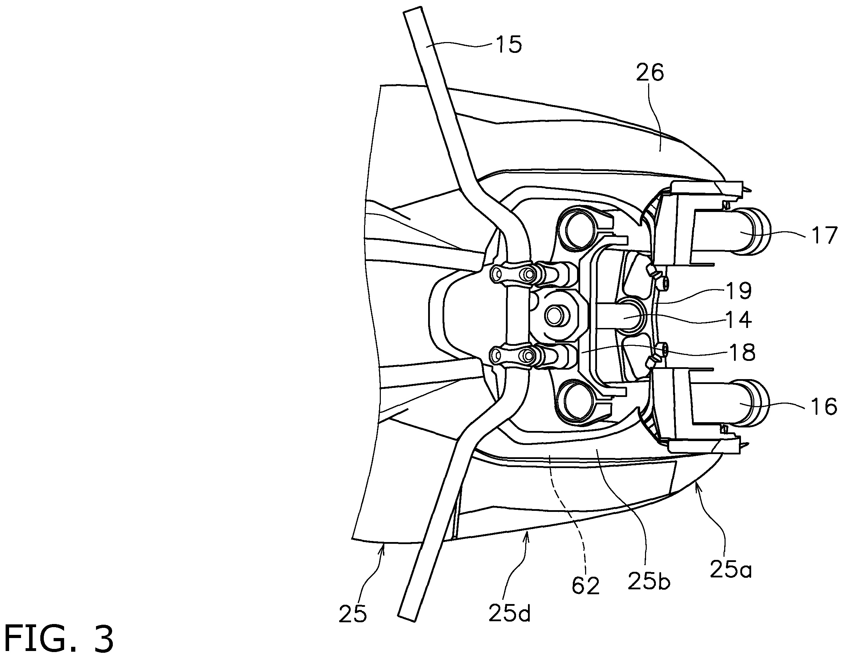

As shown in FIG. 3, the operating member 62 is disposed to be invisible in the vehicle plan view. The operating member 62 is disposed further on the lower side than the upper surface of the right side cover 25 and overlaps therewith in the vehicle plan view. When described in detail, the operating member 62 is disposed further on the lower side than the upper cover portion 25b and overlaps therewith in the vehicle plan view. The operating member 62 is disposed below the upper surface portion 33 of the storage box 30.

In the straddled vehicle 1 according to the present aspect, the operating member 62 is disposed remote from the right side cover 25 on the inner side of the storage box 30 in the vehicle width direction. In other words, it is made possible to dispose the operating member 62 in a position near to the storage box 30, and simultaneously, to omit a region for disposing the operating member 62 on the external surface of the right side cover 25. Accordingly, it is possible to inhibit degradation in accessibility to the storage box 30 from the operating member 62, and simultaneously, to efficiently dispose the storage box 30 inside the right side cover 25. Besides, the storage box 30 can be further enhanced in anti-crime performance than when the operating member 62 is disposed on the external surface of the right side cover 25.

The operating member 62 is disposed on the external surface of the vehicle width directionally inner portion of the storage box 30; hence, compared to when the operating member 62 is disposed on the external surface of the right side cover 25, the operating member 62 is herein unlikely to be visible by a third party. Because of this, the storage box 30 can be enhanced in anti-crime performance. Besides, compared to when the operating member 62 is disposed remote from the storage portion 31, the operating member 62 can be herein inhibited from being complicated in structure.

In the closed state, the storage box 30 is covered with the lid cover 25d of the right side cover 25; hence, the storage box 30 is unlikely to be recognized by a third party. Because of this, the storage box 30 can be enhanced in anti-crime performance; simultaneously, the vehicle can be intended to be enhanced in external aesthetics. Besides, the storage box 30 can be protected by the lid cover 25d.

One preferred embodiment of the present invention has been explained above. However, the present invention is not limited to the preferred embodiment described above, and a variety of changes can be made within the scope of the appended claims.

The straddled vehicle 1 may be an electric straddled vehicle. In this case, the power unit 6 may include an electric motor, while the tank-like member 4 may include a battery. The battery may be stored in the tank-like member 4.

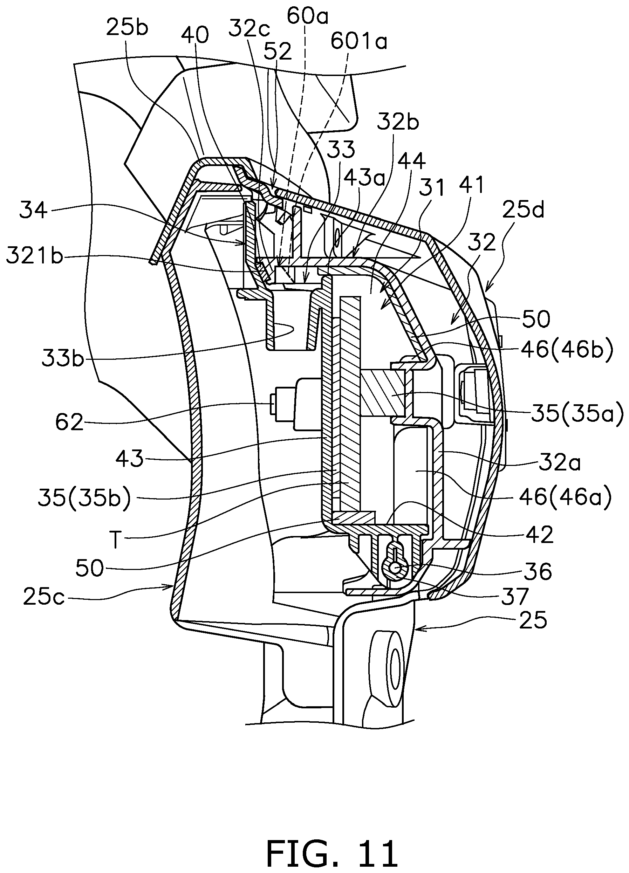

The storage box 30 may be disposed inside the left side cover 26. The storage box 30 may be changed in configuration. The opening and closing mechanism 60 and the operating member 62 may be changed in configuration. The operating member 62 may be disposed remote from the external surface of the vehicle width directionally inner portion of the storage box 30, while overlapping with the storage box 30 in the vehicle side view. The operating member 62 may protrude inward from the opening 251c in the vehicle width direction. The operating member 62 may be disposed to be flush with the inner cover portion 25c. As shown in FIG. 11, in the closed state, the operating member 62 may be disposed to overlap with the canopy portion 32b of the lid portion 32 in the vehicle plan view. The operating member 62 may be disposed below the upper surface portion 33 of the storage box 30.

### Reference Signs list

- 1: Straddled vehicle

- 3: Steering device
- 11: Head pipe
- 15: Handle
- 25: Right side cover (exemplary side cover)
- 25a: Side cover body
- 25c: Inner side cover portion
- 251c: Opening
- 25d: Lid cover
- 30: Storage box
- 31: Storage portion
- 32: Lid portion
- 33: Upper surface portion
- 36: Shaft portion
- 41: Opening
- 48: Drain hole
- 62: Operating member

## Claims

1. A straddled vehicle (1) comprising:
a head pipe (11);
a steering device (3) turnably supported by the head pipe (11);
a side cover (25) disposed lateral to the steering device (3) and on one side of the head pipe (11) in a vehicle width direction;
a storage box (30) disposed inside the side cover (25), the storage box (30) including a storage portion (31) and a lid portion (32), the storage portion (31) including an opening (41) for putting-in and taking-out of an item, the lid portion (32) configured to open and close the storage portion (31); and
an operating member (62) for causing the lid portion (32) to perform an opening action, the operating member (62) being disposed apart from the side cover (25) on the one side of the head pipe (11) in the vehicle width direction and on an inner side of the storage box (30) in the vehicle width direction; said operating member (62) being accessible from a space between the steering device (3) and the side cover (25);
**characterized in that** said operating member (62) is disposed on an external surface of a vehicle width directionally inner portion of the storage box (30).

2. The straddled vehicle according to claim 1, wherein the operating member (62) is disposed below an upper surface of the side cover (25), the operating member (62) overlapping with the upper surface of the side cover (25) in a vehicle plan view.

3. The straddled vehicle according to claim 1, wherein the operating member (62) is disposed further on an outer side than an external surface of a vehicle width directionally inner portion of the side cover (25) in the vehicle width direction.

4. The straddled vehicle according to any one of claims 1 to 3, wherein
the side cover (25) includes an inner cover portion (25c), the inner cover portion (25c) being configured to cover an external surface of a vehicle width directionally inner portion of the storage box (30), and
the inner cover portion (25c) includes an opening (251c) for operating the operating member (62) from the inner side of the inner cover portion (25c) in the vehicle width direction.

5. The straddled vehicle according to any one of claims 1 to 3, wherein the operating member (62) is a push button pressable to an outer side from the inner side in the vehicle width direction.

6. The straddled vehicle according to any one of claims 1 to 3, wherein the operating member overlaps with the lid portion in a vehicle plan view when the lid portion (32) is closed.

7. The straddled vehicle according to any one of claims 1 to 3, wherein the side cover (25) further includes a lid cover (25d), the lid cover (25d) being fixed to the lid portion (32) outside the lid portion (32) so as to be unitarily pivotable therewith.

8. The straddled vehicle according to claim 7, wherein
the side cover (25) further includes a side cover body (25a) in which the storage portion (31) of the storage box (30) is disposed, and
the lid cover (25d) and the side cover body (25a) form a labyrinth structure.

9. The straddled vehicle according to any one of claims 1 to 3, wherein
the storage box (30) further includes a shaft portion (36), the shaft portion (36) being configured to pivotably support the lid portion (32),
the shaft portion (36) extends in a vehicle back-and-forth direction, and
the lid portion (32) is configured to be opened outward in the vehicle width direction with respect to the storage portion (31).

10. The straddled vehicle according to any one of claims 1 to 3, wherein the opening (41) is opened upward and outward in the vehicle width direction.

11. The straddled vehicle according to any one of claims 1 to 3, wherein the storage box (30) further includes an upper surface portion (33), the upper surface portion (33) extending from the storage portion (31) in a direction of closing the lid portion (32), the upper surface portion (33) being disposed below an upper end of the storage portion (31).

12. The straddled vehicle according to claim 11, wherein the operating member (62) is disposed below the upper surface portion.

13. The straddled vehicle according to any one of claims 1 to 3, wherein
the steering device (3) includes a handle (15), and
the storage box (30) is disposed below a turning trajectory of the handle (15).

## Patentansprüche

1. Spreizsitz-Fahrzeug (1), das umfasst:
ein Steuerrohr (11);
eine Lenkeinrichtung (3), die über das Steuerrohr (11) drehbar gelagert ist;
eine Seitenverkleidung (25), die seitlich von der Lenkeinrichtung (3) und an einer Seite des Steuerrohrs (11) in einer Fahrzeug-Breitenrichtung angeordnet ist;
ein Aufbewahrungsfach (30), das im Inneren der Seitenverkleidung (25) angeordnet ist, wobei das Aufbewahrungsfach (30) einen Aufbewahrungsabschnitt (31) sowie einen Deckelabschnitt (32) enthält, wobei der Aufbewahrungsabschnitt (31) eine Öffnung (41) zum Einlegen sowie Entnehmen eines Gegenstandes enthält und der Deckelabschnitt (32) zum Öffnen und Schließen des Aufbewahrungsabschnitts (31) ausgeführt ist; sowie
ein Betätigungselement (62), mit dem der Deckelabschnitt (32) veranlasst wird, einen Öffnungsvorgang durchzuführen, wobei das Betätigungselement (62) von der Seitenverkleidung (25) getrennt an der einen Seite des Steuerrohrs (11) in der Fahrzeug-Breitenrichtung sowie an einer Innenseite des Aufbewahrungsfachs (30) in der Fahrzeug-Breitenrichtung angeordnet ist; und das Betätigungselement (62) über einen Raum zwischen der Lenkvorrichtung (3) und der Seitenverkleidung (25) zugänglich ist;
**dadurch gekennzeichnet, dass** das Betätigungselement (62) an einer Außenfläche eines in Fahrzeug-Breitenrichtung innenliegenden Abschnitts des Aufbewahrungsfachs (30) angeordnet ist.

2. Spreizsitz-Fahrzeug nach Anspruch 1, wobei das Betätigungselement (62) unterhalb einer oberen Fläche der Seitenverkleidung(25) angeordnet ist und sich das Betätigungselement (62) in einer Fahrzeug-Draufsicht mit der oberen Fläche der Seitenverkleidung (25) überlappt.

3. Spreizsitz-Fahrzeug nach Anspruch 1, wobei das Betätigungselement (62) in der Fahrzeug-Breitenrichtung weiter zu einer äußeren Seite einer Außenfläche eines in Fahrzeug-Breitenrichtung innenliegenden Abschnitts der Seitenverkleidung (25) hin angeordnet ist.

4. Spreizsitz-Fahrzeug nach einem der Ansprüche 1 bis 3, wobei
die Seitenverkleidung (25) einen inneren Verkleidungsabschnitt (25c) einschließt und der innere Verkleidungsabschnitt (25) so ausgeführt ist, dass er eine Außenfläche eines in Fahrzeug-Breitenrichtung innenliegenden Abschnitts des Aufbewahrungsfachs (25) abdeckt, und
der innere Verkleidungsabschnitt (25c) eine Öffnung (251c) zum Betätigen des Betätigungselementes (62) über die Innenseite des inneren Verkleidungsabschnitts (25c) in der Fahrzeug-Breitenrichtung enthält.

5. Spreizsitz-Fahrzeug nach einem der Ansprüche 1 bis 3, wobei das Betätigungselement (62) ein Druckknopf ist, der von der Innenseite in der Fahrzeug-Breitenrichtung zu einer Außenseite hin gedrückt werden kann.

6. Spreizsitz-Fahrzeug nach einem der Ansprüche 1 bis 3, wobei sich das Betätigungselement, wenn der Deckelabschnitt (32) geschlossen ist, sich in einer Fahrzeug-Draufsicht mit dem Deckelabschnitt überlappt.

7. Spreizsitz-Fahrzeug nach einem der Ansprüche 1 bis 3, wobei die Seitenverkleidung (25) des Weiteren eine Deckel-Verkleidung (25d) enthält und die Deckel-Verkleidung (25d) außerhalb des Deckelabschnitts (32) so an dem Deckelabschnitt (32) befestigt ist, dass sie zusammen damit geschwenkt werden kann.

8. Spreizsitz-Fahrzeug nach Anspruch 7, wobei
die Seitenverkleidung (25) des Weiteren einen Seitenverkleidungs-Körper (25a) einschließt, in dem der Aufbewahrungsabschnitt (31) des Aufbewahrungsfachs (30) angeordnet ist, und
die Deckel-Verkleidung (25d) und der Seitenverkleidungs-Körper (25a) eine Labyrinthstruktur bilden.

9. Spreizsitz-Fahrzeug nach einem der Ansprüche 1 bis 3, wobei
das Aufbewahrungsfach (30) des Weiteren einen Wellenabschnitt (36) einschließt, wobei der Wellenabschnitt (36) zum schwenkbaren Lagern des Deckelabschnitts (32) ausgeführt ist,
sich der Wellenabschnitt (36) in einer Fahrzeug-Längsrichtung erstreckt, und
der Deckelabschnitt (32) so ausgeführt ist, dass er in der Fahrzeug-Breitenrichtung in Bezug auf den Aufbewahrungsabschnitt (31) nach außen geöffnet wird.

10. Spreizsitz-Fahrzeug nach einem der Ansprüche 1 bis 3, wobei sich die Öffnung (41) in der Fahrzeug-Breitenrichtung nach oben und nach außen öffnet.

11. Spreizsitz-Fahrzeug nach einem der Ansprüche 1 bis 3, wobei das Aufbewahrungsfach (30) des Weiteren einen Oberseitenabschnitt (33) einschließt, sich der Oberseitenabschnitt (33) in einer Richtung zum Schließen des Deckelabschnitts (32) von dem Aufbewahrungsabschnitt (31) aus erstreckt und der Oberseitenabschnitt (33) unterhalb eines oberen Endes des Aufbewahrungsabschnitts (31) angeordnet ist.

12. Spreizsitz-Fahrzeug nach Anspruch 11, wobei das Betätigungselement (62) unterhalb des Oberseitenabschnitts angeordnet ist.

13. Spreizsitz-Fahrzeug nach einem der Ansprüche 1 bis 3, wobei
die Lenkeinrichtung (3) einen Griff (15) einschließt, und
das Aufbewahrungsfach (30) unterhalb einer Dreh-Bewegungsbahn des Griffs (15) angeordnet ist.

## Revendications

1. Véhicule à enfourcher (1), comprenant :
un tube de tête (11) ;
un dispositif de direction (3) supporté de manière tournante par le tube de tête (11) ;
un carénage latéral (25) disposé latéralement par rapport au dispositif de direction (3) et sur un côté du tube de tête (11) en direction de la largeur du véhicule ;
un coffre de stockage (30) disposé à l'intérieur du carénage latéral (25), le coffre de stockage (30) incluant une portion de stockage (31) et une portion de couvercle (32), la portion de stockage (31) incluant une ouverture (41) pour insérer et extraire un article, la portion de couvercle (32) étant configurée pour ouvrir et fermer la portion de stockage (31) ; et
un élément d'actionnement (62) pour amener la portion de couvercle (32) à effectuer une action d'ouverture, l'élément d'actionnement (62) étant disposé à l'écart du carénage latéral (25) sur ledit un côté du tube de tête (11) en direction de la largeur du véhicule et sur un côté interne du coffre de stockage (30) en direction de la largeur du véhicule ; ledit élément d'actionnement (62) étant accessible depuis un espace situé entre le dispositif de direction (3) et le carénage latéral (25) ;
**caractérisé en ce que** ledit élément d'actionnement (62) est disposé sur une surface externe d'une portion interne du coffre de stockage (30) en direction de la largeur du véhicule.

2. Véhicule à enfourcher selon la revendication 1, dans lequel l'élément d'actionnement (62) est disposé sous une surface supérieure du carénage latéral (25), l'élément d'actionnement (62) chevauchant la surface supérieure du carénage latéral (25) en vue en plan du véhicule.

3. Véhicule à enfourcher selon la revendication 1, dans lequel l'élément d'actionnement (62) est disposé plus loin sur un côté externe en direction de la largeur du véhicule qu'une surface externe d'une portion interne en direction de la largeur du véhicule du carénage latéral (25).

4. Véhicule à enfourcher selon l'une quelconque des revendications 1 à 3, dans lequel
le carénage latéral (25) inclut une portion de carénage interne (25c), la portion de carénage interne (25c) étant configurée pour recouvrir une surface externe d'une portion interne du coffre de stockage (30) en direction de la largeur du véhicule, et
la portion de carénage interne (25c) inclut une ouverture (251c) pour actionner l'élément d'actionnement (62) depuis le côté interne de la portion de carénage interne (25c) en direction de la largeur du véhicule.

5. Véhicule à enfourcher selon l'une quelconque des revendications 1 à 3, dans lequel l'élément d'actionnement (62) est un bouton-poussoir pouvant être poussé vers un côté externe depuis le côté interne en direction de la largeur du véhicule.

6. Véhicule à enfourcher selon l'une quelconque des revendications 1 à 3, dans lequel l'élément d'actionnement chevauche la portion de couvercle en vue en plan du véhicule quand la portion de couvercle (32) est fermée.

7. Véhicule à enfourcher selon l'une quelconque des revendications 1 à 3, dans lequel le carénage latéral (25) inclut en outre un carénage de couvercle (25d), le carénage de couvercle (25d) étant fixé à la portion de couvercle (32) à l'extérieur de la portion de couvercle (32) de manière à pouvoir pivoter solidairement à celle-ci.

8. Véhicule à enfourcher selon la revendication 7, dans lequel
le carénage latéral (25) inclut en outre un corps de carénage latéral (25a) dans lequel est disposée la portion de stockage (31) du coffre de stockage (30), et
le carénage de couvercle (25d) et le corps du carénage latéral (25a) forment une structure en labyrinthe.

9. Véhicule à enfourcher selon l'une quelconque des revendications 1 à 3, dans lequel
le coffre de stockage (30) inclut en outre une portion d'axe (36), la portion d'axe (36) étant configurée pour supporter la portion de couvercle (32) de manière pivotante,
la portion d'axe (36) s'étend dans une direction avant-arrière du véhicule, et
la portion de couvercle (32) est configurée pour être ouverte vers l'extérieur en direction de la largeur du véhicule par rapport à la portion de stockage (31).

10. Véhicule à enfourcher selon l'une quelconque des revendications 1 à 3, dans lequel l'ouverture (41) est ouverte vers le haut et vers l'extérieur en direction de la largeur du véhicule.

11. Véhicule à enfourcher selon l'une quelconque des revendications 1 à 3, dans lequel le coffre de stockage (30) inclut en outre une portion de surface supérieure (33), la portion de surface supérieure (33) s'étendant depuis la portion de stockage (31) dans une direction de fermeture de la portion de couvercle (32), la portion de surface supérieure (33) étant disposée sous une extrémité supérieure de la portion de stockage (31).

12. Véhicule à enfourcher selon la revendication 11, dans lequel l'élément d'actionnement (62) est disposé sous la portion de surface supérieure.

13. Véhicule à enfourcher selon l'une quelconque des revendications 1 à 3, dans lequel
le dispositif de direction (3) inclut une poignée (15), et
le coffre de stockage (30) est disposé en dessous d'une trajectoire de rotation de la poignée (15).
